Europäisches Patentamt

European Patent Office

Office européen des brevets

(19)

(11) Publication number: **0 169 949**
**A1**

## (12) EUROPEAN PATENT APPLICATION

(21) Application number: **84305002.2**

(22) Date of filing: **24.07.84**

(51) Int. Cl.⁴: **F 16 L 1/04**

(43) Date of publication of application:
**05.02.86 Bulletin 86/6**

(84) Designated Contracting States:
**BE DE FR IT NL SE**

(71) Applicant: **Leishman, Hendry Robert**
**48 Broom Grove**
**Pitcorthie Estate Dunfermline KY11 5QZ(GB)**

(72) Inventor: **Leishman, Hendry Robert**
**48 Broom Grove**
**Pitcorthie Estate Dunfermline KY11 5QZ(GB)**

(74) Representative: **Wotherspoon, Graham et al,**
**FITZPATRICKS 4 West Regent Street**
**Glasgow G2 1RS Scotland(GB)**

(54) **Remotely releasable clamp.**

(57) A clamp for attaching a buoy to a pipeline has arms (1, 2) hinged together at (14). The clamp is held closed in position by a mechanism (15) in which a locking pin (20) is held by a latch (35). The locking pin (20) is biased open by a spring (23), while the latch (35) is biased shut by a spring (34).

To release the clamp from a remote location, the member (35) is pulled to overcome the force of the latch spring (34), thus freeing the locking pin (20) for withdrawal by the spring (23).

In an alternative embodiment, the clamp is held closed by a magnetic arrangement.

EP 0 169 949 A1

Croydon Printing Company Ltd

0169949

<u>"Remotely releasable clamp"</u>

<u>DESCRIPTION</u>

This invention relates to a clamp which can be attached to an object and subsequently released therefrom from a remote location. The invention is particularly, but not exclusively, contemplated for use in attaching buoys to submerged objects such as pipelines.

It is customary in subsea oil exploitation to mark the course of a pipeline temporarily during construction work by buoys spaced along the pipeline. Conventionally each buoy is tethered to the pipeline with manilla rope, each rope being attached to the pipeline simply by being tied around it. With larger pipe sizes, one man cannot reach round the pipe, and it is necessary for pairs of divers to attach the ropes. This requires a large amount of diver time and the time of associated vessels and equipment, and because a high cost would also be incurred in recovery the buoys and ropes are frequently abandoned after use.

A further problem is that many subsea pipelines are partially buried in sand or coral. The divers are thus required to dig a channel under the pipe to position the rope. This is extremely time consuming.

An object of the invention is to provide a clamp for use in circumstances such as the above, the clamp being easily attachable to an object and able to be detached therefrom a distance.

The invention accordingly provides a remotely releasable clamp comprising first and second clamping parts mounted for movement relative to one another, a locking member mounted on one clamping part for movement between a first position preventing said relative movement and a second position permitting said relative movement, and holding means normally holding the locking member in said first position, the holding means being provided with an attachment point for a rope or the like and being adapted to free the locking member when a force exceeding a predetermined limit is applied to the attachment point.

In a preferred form, the locking member is biased towards said second position, and the holding means comprises a latch member engageable with the locking member, the latch member being urged into engagement with the locking member by spring means having a predetermined spring force which establishes said predetermined limit.

This arrangement makes it possible to have a clamp which is either positively locked or positively unlocked, with a snap action between the two conditions, and with a minimal risk of fouling during the change between the two conditions.

Embodiments of the invention will now be described by way of example, with reference to the accompanying drawings, in which:

Fig. 1 shows a clamp in elevation,

Fig. 2 shows a clamp in elevation with some parts in section, and

Fig. 3 is a view similar to Fig. 1 of an alternative embodiment.

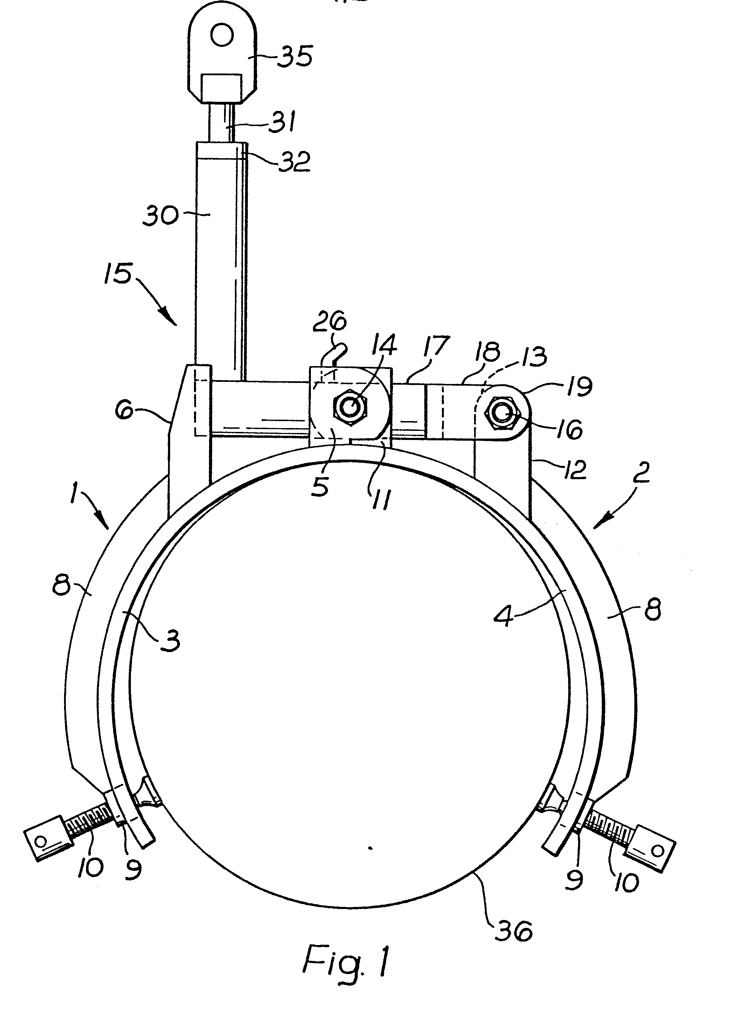

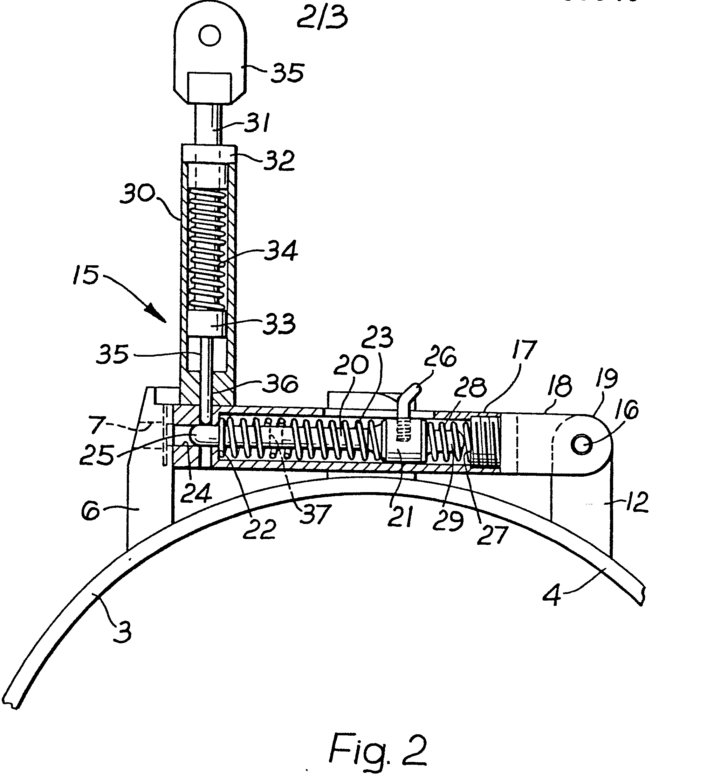

Referring to Figs. 1 and 2, first and second clamping parts 1 and 2 each comprises an arcuate jaw 3,4. One end of the jaw 3 has two ears 5 spaced apart (only one of which is shown). A projection 6 has an opening 7 therethrough. Extending from the projection 6 to the other end of the jaw 3 is a strengthening rib 8 which is thickened at 9 near the other end of the jaw 3 threadedly to receive an adjusting bolt 10. One end of the jaw 4 has two ears 11 spaced apart (only one of which is shown). A projection 12 is provided on the jaw 4 corresponding in position to the projection 6 on the jaw 3. The free end of the projection 12 is formed as an ear 13. Items 8,9 and 10 are also provided on the jaw 4. The parts 1 and 2 are pivoted together by means of two bolts 14 (only one of which is shown). Each bolt 14 passes through openings in a pair of ears 5 and 11. This pivotal arrangement provides a space between both sets of items 5, 11 and 14.

A locking and latching arrangement 15 is pivoted to the yoke 13 by means of a bolt 16. The arrangement 15 comprises a cylinder 17 having an end piece 18 from which extends a yoke 19 through which the bolt 16 passes. Within the cylinder 17 is a locking member in the form of a rod 20 carrying a piston 21 between which and an end wall 22 of the cylinder 17 is a compression spring 23. The rod 20 is slidable through an opening 24 in the end wall 22, has a rounded free end 25 for ease of entry into the opening 7 and has a diametral opening 37. A pin 26 extends laterally through a slot (not shown) in the cylinder 17 and into the piston 21 carried by the rod 20.

Between the opposite side of the piston 21 and the end wall 27 of the end piece 18 is a second compression spring 28. On this side of the piston 21 there is also a second, shorter, round-ended rod 29.

Also extending laterally from the cylinder 17 is another cylinder 30. A rod 31 is slidable through an end piece 32 for the cylinder 30 and at one end carries a piston 33. A compression spring 34 is retained between the end piece 32 and the piston 33. A latching member is provided in the form of a rod 35 extending through an opening 36 in the end wall of the cylinder 30 and into the piston 33. This rod 34 is designed to enter the diametral opening in the rod 20. At the other end of the rod there is provided an attachment point in the form of an eye 35 for a rope or the like.

In order for a diver to fit the clamp to a pipe 36, the locking and latching arrangement 15 is swung clear of the locking bracket 6 allowing parts 1 and 2 to be swung wide open. The jaws are then closed around the pipe 36 as shown in the drawing and the arrangement 15 swung back into the position shown. Then, applying the appropriate tool to the pin 26, the piston 21 is moved against the force of the spring 23 so that the rod 20 is extended and enters the opening 7. This action brings the diametral opening through the rod 20 into line beneath the rod 35. In this condition the spring 34 is free to shoot the rod 35 into the diametral opening in the extended rod 20. Finally, the adjusting bolts 10 are tightened as necessary.

When it is desired to remove the clamp from the pipe 36 the rope or the like attached to the eye 35 is jerked from the sea surface sufficiently hard momentarily to overcome the spring 34 and pull the rod 35 out of the diametral opening in the rod 20. This permits the spring 23 to shoot the rod 20 out of the opening 7 and release the arrangement (as shown in broken lines). The spring 28 serves to absorb the momentum of the piston 21 as it shoots back along the cylinder 17. The release of the arrangement 15 then permits the parts 1 and 2 to open and release the clamp as a whole from the pipe 36 so that the clamp can be retrieved. It is to be noted on the one hand that the force of the spring 34 must exceed the buoyancy force of the buoy so as to avoid inadvertent release of the clamp. On the other hand, the force of the spring 34 must not be too great to avoid release by applying a deliberate jerk. The buoyancy force of the buoy is usually about 60lbs (27kg). A spring force of about 90lbs (41kg) has been found to be effective.

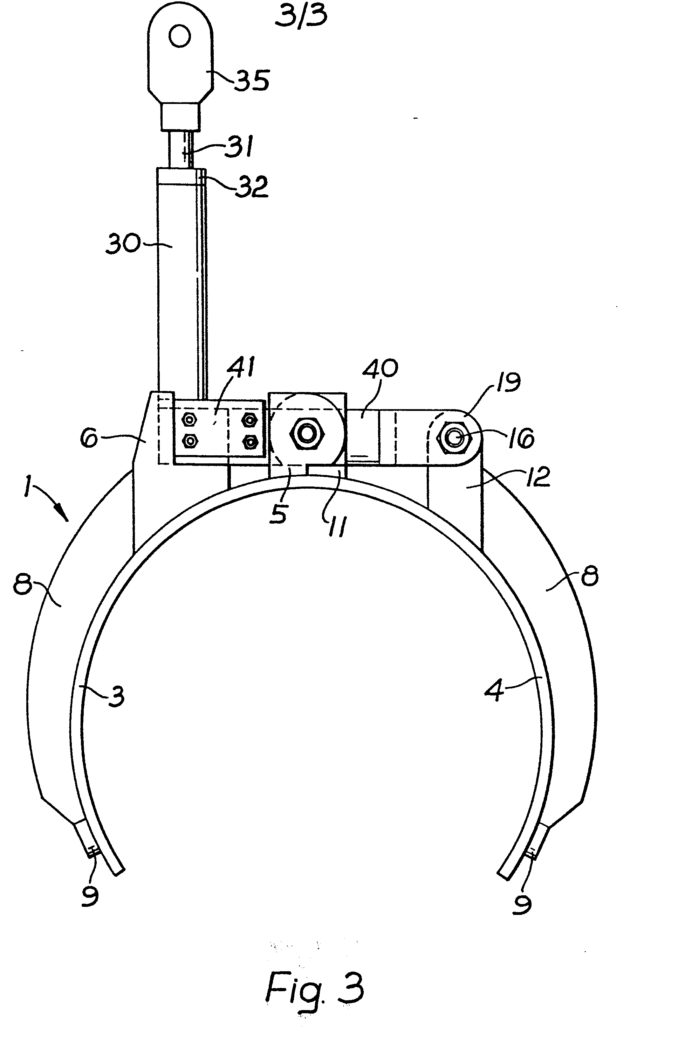

Fig. 3 shows an alternative embodiment in which like parts are denoted by like reference numerals. In this embodiment, however, the jaws 3,4 are locked by a bar 40 (in place of the cylinder 17 and end piece 18) pivoted to the yoke 19. The bar 40 is normally held in place by a permanent magnet 41. The clamp is released by pulling on the eye 35 with sufficient force to overcome the force of the magnet 41. The rod 31 may act on the cylinder 30 via a piston and spring arrangement (not seen in Fig. 3) similar to the arrangement 33,34 of Fig. 2. In this case, however, it is the magnet force which must be sufficiently great (e.g. 200-250lbs) to resist the buoyancy force of the buoy.

CLAIMS

1. A remotely releasable clamp comprising first and second clamping parts mounted for movement relative to one another, a locking member mounted on one clamping part for movement between a first position preventing said relative movement and a second position permitting said relative movement, and holding means normally holding the locking member in said first position, the holding means being provided with an attachment point for a rope or the like and being adapted to free the locking member when a force exceeding a predetermined limit is applied to the attachment point.

2. A clamp according to claim 1, in which the holding means comprises a permanent magnet.

3. A clamp according to claim 1, in which the locking member is biased towards said second position, and the holding means comprises a latch member engageable with the locking member, the latch member being urged into engagement with the locking member by spring means having a predetermined spring force which establishes said predetermined limit.

4. A clamp according to claim 3, in which the locking member comprises a rod movable within a cylindrical housing and biased by a compression spring trapped between the housing and a collar on the rod.

5. A clamp according to claim 4, in which the latch member comprises a pin movable within a second cylindrical housing and biased by a compression spring trapped between said second cylindrical housing and a second collar on said pin.

6. A clamp according to claim 5, in which said pin is engageable with a bore in said rod.

7. A clamp according to claim 5 or claim 6, in which said cylindrical housings are secured together and are pivoted as a unit on one of said clamping parts, said rod being engageable with an aperture on the other of said clamping parts.

8.      A clamp according to any preceding claim, in which the clamping parts are of arcuate shape for partially encircling a pipe, and are provided at their outer ends with adjustable pipe-engaging means.

1/3

0169949

Fig. 1

0169949

Fig. 2

0169949

Fig. 3

## European Patent Office

## DOCUMENTS CONSIDERED TO BE RELEVANT

| Category | Citation of document with indication, where appropriate, of relevant passages | Relevant to claim | CLASSIFICATION OF THE APPLICATION (Int. Cl 4) |
|---|---|---|---|
| A | US-A-4 399 601 (AYERS) <br> * Abstract; figures 3a,3b * | 1,8 | F 16 L 1/04 |
| A | US-A-3 128 512 (MOULTON) <br> * Whole document * | 1 | |
| A | US-A-3 765 185 (PECK et al.) <br> * Figures 3,5 * | 1,8 | |
| A | FR-A-2 355 229 (E.R.A.P.) | | |
| A | US-A-4 179 143 (SHY) | | |

**TECHNICAL FIELDS SEARCHED (Int. Cl.4)**

F 16 L
B 66 C
F 16 B
E 05 C

The present search report has been drawn up for all claims

| Place of search | Date of completion of the search | Examiner |
|---|---|---|
| THE HAGUE | 16-04-1985 | SCHAEFFLER C.A.A. |